# EUROPEAN PATENT APPLICATION

(11) **EP 3 476 445 A1**
(43) Date of publication of application: **01.05.2019**
(21) Application number: 17382727.0
(22) Date of filing: 30.10.2017
(51) Int. Cl.: A63B 47/00, A63B 71/00, B62B 5/00, B62B 3/02, B62B 3/04, A63B 102/02

(54) **BALL CART FOR TENNIS BALLS**

(71) Applicant: Sánchez Martínez, Fernando, 29016 Málaga (ES); Freixo Carrasco, Felipe A., 52001 Melilla (ES); Ancaso Consultores, SL, 29630 Benalmádena Costa (ES)
(72) Inventor: SÁNCHEZ MARTÍNEZ, Fernando, 29016 Málaga (ES); FREIXO CARRASCO, Felipe A., 52001 Melilla (ES); MORAL CALDERÓN, Carlos David, 29630 Benalmádena Costa (ES)
(74) Representative: Juncosa Miró, Jaime

(57) **Abstract**

The ball cart for tennis balls comprises a foldable structure with wheels to roll on a ground, a ball basket (3) supported on the foldable structure, and a basket position adjusting mechanism. The ball basket (3) comprises a fixed frame (4), a movable bottom (5) vertically movable with respect to the fixed frame (4), side walls (6) attached to the fixed frame, and elastic elements (7) having one end connected to the fixed frame (4) and another end connected to the movable bottom (5). The elastic elements (7) are deformable as a result of a weight of tennis balls (B) supported on the movable bottom (5) and have an elastic modulus selected to allow the movable bottom (5) to gradually ascend or descend according to the amount of tennis balls (B) contained in the ball basket (3) so as to keep an upper level of the tennis balls (B) constant.

## Description

### Technical field

The present invention relates to a ball cart for tennis balls useful for carrying tennis balls and putting the tennis balls at the disposal of a tennis coach or a tennis practitioner during a training session.

### Background art

Tennis coaches and tennis practitioners make use of ball baskets for carrying tennis balls and having numerous tennis balls at their disposal during training sessions. These ball baskets are usually supported on a structure which is eventually provided with wheels to form a ball cart able to be manually driven rolling on the ground.

Document DE 4443535 A1 discloses a ball cart for tennis balls comprising a foldable structure provided with wheels arranged to roll on the ground, a ball basket supported on the foldable structure, and a basket adjusting mechanism configured to adjust a position of the ball basket on the foldable structure at different heights with respect to the ground. The ball basket has a fixed bottom and is configured to contain numerous tennis balls arranged at multiple levels on the fixed bottom.

A drawback of the ball cart disclosed in the cited document DE 4443535 A1 is that, due to the fixed bottom, the level of the tennis balls in the ball basket descends as the balls are being extracted and used during the training session, forcing the tennis trainer or tennis practitioner to bend down more and more to catch the balls as the training session progresses, which can lead to fatigue and back problems making the training session ineffective.

Moreover the cited previous ball cart has not foreseen means for periodically cleaning the ball basket and does not include a tray or container to store cold beverages and further assisting to connect electronic equipments.

Therefore, there is a need for a ball cart for tennis balls which minimizes the aforementioned drawbacks of fatigue and back problems for the tennis coaches and tennis practitioners in order to make the training sessions easier and effective.

### Disclosure of the invention

The present invention contributes to cover the above and other needs by providing a tennis cart for tennis balls comprising a foldable structure, a ball basket supported on the foldable structure, and a basket adjusting mechanism configured to adjust a position of the ball basket on the foldable structure at different heights with respect to the ground, wherein the foldable structure is provided with wheels making it able to roll on a ground, and the ball basket is configured to contain tennis balls.

The ball basket comprises a fixed frame which can be detachably connected to the foldable structure, a movable bottom vertically movable with respect to the fixed frame, side walls attached to the fixed frame; and elastic elements having one end connected to the fixed frame and another end connected to the movable bottom, wherein the elastic elements are deformable as a result of a weight of the tennis balls supported on the movable bottom and have an elastic modulus selected to allow the movable bottom to gradually ascend or descend according to the amount of tennis balls contained in the ball basket so as to keep an upper level of the tennis balls constant.

In an embodiment, the ball basket further comprises a fixed bottom fixedly attached to the fixed frame and located below the movable bottom, and the elastic elements comprise helical compression springs arranged between the fixed bottom and the movable bottom. Optionally, the fixed frame comprises an upper perimetral section and the side walls extend from the upper perimetral section to the fixed bottom.

In an alternative embodiment, the fixed frame comprises an upper perimetral section and the elastic elements comprise helical traction springs or elastic straps arranged between the movable bottom and the upper perimetral section.

Preferably, the ball basket includes a removable cover connectable to the upper perimetral section by fastening elements such as a perimetral zip, clasps, hooks, buttons or buckles. The removable cover is preferably flexible and can be provided with a plurality of openings sized so as do not allow the passage of the tennis balls therethrough.

It is also preferred that the ball basket comprises a detachable and cleanable upper plate supported on the movable bottom. As it is known, the tennis balls release a lot of fuzz than can lay in or gather on he ball basket and that can be easily removed by detaching the upper plate from the movable bottom and by cleaning it, for example with a vacuum cleaner or a brush, or simply by shaking it.

In one embodiment, regardless of the configuration of the ball basket, the foldable structure comprises a rear wheel support assembly carrying two coaxial and spaced apart rear wheels, a front wheel support assembly carrying one or more caster wheels, and a handle support assembly carrying a handle. The rear wheel support assembly, the front wheel support assembly and the handle support assembly are hinged to one another about one hinge axis or more than one parallel hinge axes so that they are rotatable between an operative position and a folded position.

In the operative position, the foldable structure adopts a configuration able to support the ball basket with an open top thereof at a selected height with respect to the ground and the rear and front wheels are positioned so as to roll on the ground. In the folded position, which is reachable upon removing the ball basket, the rear wheel support assembly, the front wheel support assembly and the handle support assembly are folded on one another so as the volume thereof is minimized.

One or more structure locking members configured to lock the rear wheel support assembly, the front wheel support assembly and the handle support assembly in the operative position are provided. Optionally, one or more structure locking members configured to lock the rear wheel support assembly, the front wheel support assembly and the handle support assembly in the folded position are further provided. The one or more structure locking members configured to lock the foldable structure in the folded position can be the same or different than the one or more structure locking members configured to lock the foldable structure in the operative position.

In an embodiment, the handle support assembly has a lower portion and an upper portion. The lower portion is hinged to the rear wheel support assembly and to the front wheel support assembly about the one or more hinge axes and the upper portion is attached to the handle. The lower portion and the upper portion are connected to one another by a handle adjusting mechanism allowing adjusting a position of the handle on the foldable structure at different heights with respect to the ground. For example, the lower portion and the upper portion are slidably connected to one another by one or more adjustment guides and one or more adjustment locking members are provided and configured to lock the upper portion to the lower portion at a selected position.

In this embodiment, the fixed frame of the ball basket is configured to be detachably connected to the upper portion of the handle support assembly by means of a detachable coupling, whereby the ball basket is movable together with the upper portion of the handle support assembly to adjust the position of the ball basket on the foldable structure at different heights with respect to the ground when the handle adjusting mechanism is used to adjust the position of the handle.

Thus, in this embodiment, a common adjusting mechanism performs the functions of both the handle adjusting mechanism and the basket adjusting mechanism. Alternatively, independent adjusting mechanisms could be used to adjust the position of the ball basket and the position of the handle.

In one embodiment, regardless of the configuration of the ball basket and the configuration of the foldable structure, the ball cart includes a lower tray located below the ball basket. This lower tray is configured to store personal items and can be detachably connected to the foldable structure when the foldable structure is in the operative position. The lower tray has to be removed to fold the foldable structure to the folded position.

Optionally, the lower tray has one or more USB ports in connection with a phone charging circuit configured to charge a cell phone, and one or more photovoltaic solar panels connected to electrically feed the phone charging circuit. Also optionally, the lower tray comprises a thermally isolated compartment dimensioned to contain at least one beverage container. In an embodiment, the lower tray, regardless of the configuration thereof, is provided with a cover.

Preferably, the ball cart further comprises a removable and foldable waterproof cover configured to cover the ball basket and at least an upper part of the foldable structure, as well as the lower tray in the case it is included. The waterproof cover is preferably configured to be stored in the lower tray in a folded condition.

Optionally, the ball cart includes a movable ball indicative element having three different colours to indicate the kind of balls loaded to the ball basket. The three colours are preferably green, orange and red. Also optionally, the handle may include a surface or a display to put the name of the tennis coach or tennis practitioner making use of the ball cart.

### Brief description of the drawings

The present invention will be better understood from the following detailed description of a merely illustrative and non-limiting exemplary embodiment with reference to the accompanying drawings, in which:
Fig. 1 is a perspective view of a ball cart for tennis balls according to an embodiment of the present invention;
Fig. 2 is a perspective view of a foldable structure pertaining to the ball cart of Fig. 1, in an operative position;
Fig. 3 is a perspective view of a ball basket pertaining to the ball cart of Fig. 1;
Fig. 4 is a diagrammatic sectional view of the ball basket completely loaded with tennis balls;
Fig. 5 is a diagrammatic sectional view of the ball basket partially loaded with tennis balls;
Fig. 6 is a perspective view of a lower tray pertaining to the ball cart of Fig. 1;
Fig. 7 is a perspective view of the ball cart covered with a waterproof cover;
Fig. 8 is a diagrammatic side view of the ball cart, with the foldable structure in the operative position and the ball basket and the lower tray supported thereon;
Fig. 9 is a diagrammatic side view of the foldable structure of the ball cart in a folded position;
Fig. 10 is a diagrammatic sectional view of a structure locking member provided to lock a rear wheel support assembly, a front wheel support assembly and o handle support assembly of the foldable structure in the operative position;
Fig. 11 is a diagrammatic sectional view of an adjustment locking member provided to lock an upper portion and a lower portion of the handle support assembly of the foldable structure in a selected position;
Fig. 12 is a diagrammatic front view of a detachable coupling to connect the ball basket to the foldable structure, in a release position;
Fig. 13 is a diagrammatic front view of the detachable coupling of Fig. 12 in a locking position; and
Fig. 14 is a cross sectional view taken by the plane XIV-XIV of Fig. 11.

### Detailed description of an exemplary embodiment

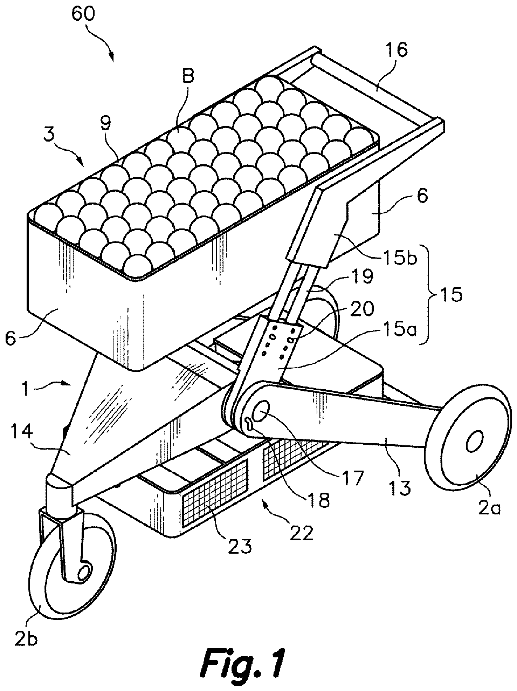

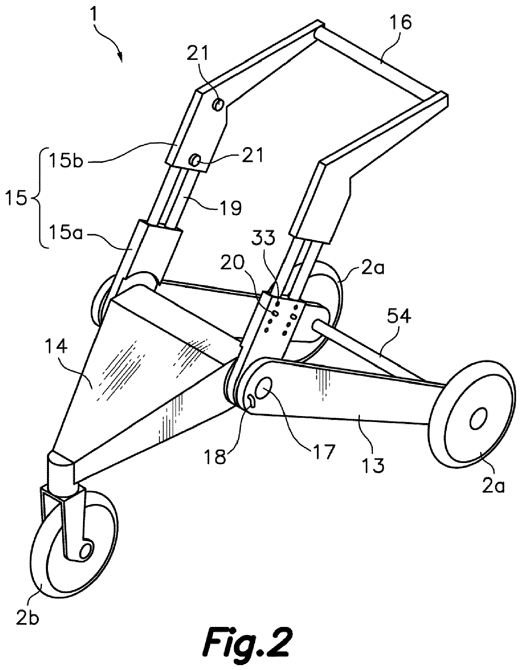

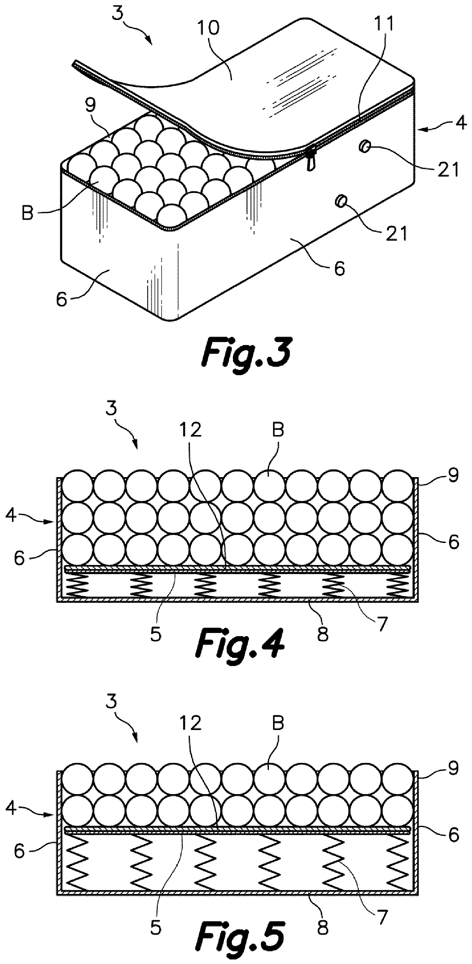

Referring first to Figs. 1 to 4, reference sign 60 generally designates a ball cart for tennis balls according to an embodiment of the present invention. The ball cart 60 comprises a foldable structure 1 (individually shown in Fig. 2), a ball basket 3 (individually shown in Fig. 3) and a lower tray 22 (individually shown in Fig. 4).

As better shown in Fig. 2, the foldable structure 1 comprises a rear wheel support assembly 13 carrying two coaxial and spaced apart rear wheels 2a, a front wheel support assembly 14 carrying one caster wheel 2b, and a handle support assembly 15 carrying a handle 16.

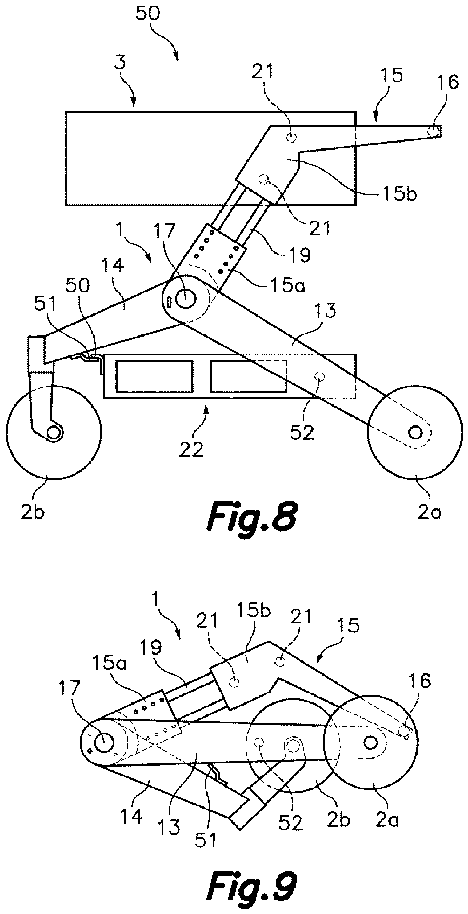

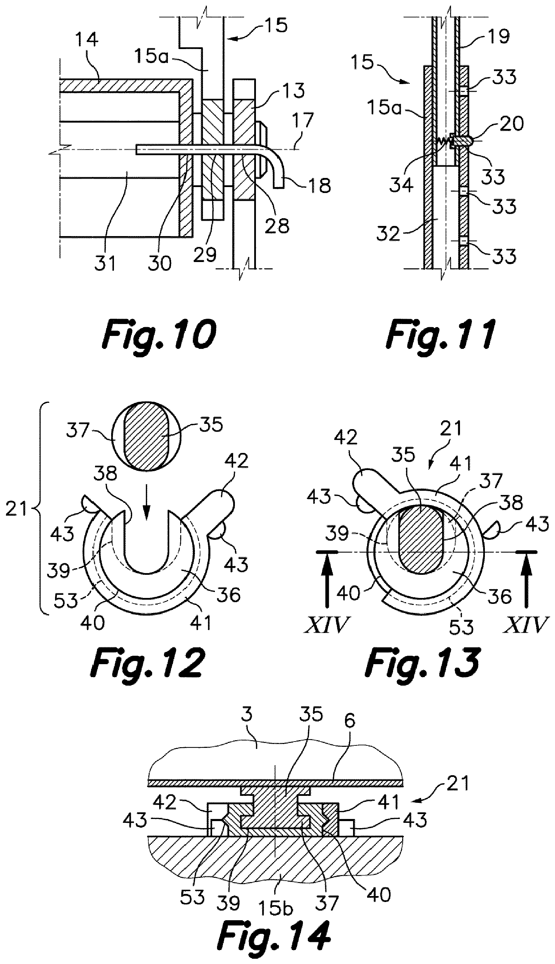

The rear wheel support assembly 13, the front wheel support assembly 14 and the handle support assembly 15 are hinged to one another about a hinge axis 17 materialized by a hinge shaft 31 (Fig. 10) and are rotatable about the hinge axis 17 between an operative position (Figs. 1, 2 and 8), in which the rear wheel support assembly 13 and the front wheel support assembly 14 maintain the rear and front wheels 2a, 2b in a position able to roll on the ground and the handle support assembly 15 maintains the handle 16 at an ergonomic height with respect to the ground, and a folded position (shown in Fig. 9), in which the rear wheel support assembly 13, the front wheel support assembly 14 and the handle support assembly 15 are folded on one another minimizing the volume thereof.

The hinge shaft 31 is supported on a rear portion of the front wheel support assembly 14 and the rear wheel support assembly 13 and the handle support assembly 15 have respective opposite side members hinged to protruding ends of the hinge shaft 31. The rear wheels 2a are connected to one another by a wheel shaft 54.

As diagrammatically shown in Fig. 10, the rear wheel support assembly 13, the front wheel support assembly 14 and the handle support assembly 15 have respective lock holes 28, 29, 30 which are mutually aligned when the foldable structure 1 is in the operative position, and a structure locking member 18 is inserted in the lock holes 28, 29, 30 to lock the rear wheel support assembly 13, the front wheel support assembly 14 and the handle support assembly 15 in the operative position.

In an alternative embodiment (not shown), other hinge elements are provided to materialize the hinge axis 17 or two mutually parallel hinge axes, such as for example aligned individual hinges connecting side members of the rear wheel support assembly 13 and the front wheel support assembly 14, aligned individual hinges connecting side members of the rear wheel support assembly 13 and the handle support assembly 15 and/or aligned individual hinges connecting side members of the front wheel support assembly 14 and the handle support assembly 15.

Also in an alternative embodiment (not shown), other structure locking members are provided to lock the foldable structure in the operative position, such as for example one or more latch members movable to engage latch-receiving elements formed or provided on the rear wheel support assembly 13, the front wheel support assembly 14 and the handle support assembly 15, or security pins inserted in security holes provided in the mentioned individual hinges.

The handle support assembly 15 comprises a lower portion 15a and an upper portion 15b. The lower portion 15a is hinged to the rear wheel support assembly 13 and to the front wheel support assembly 14 about the hinge axis 17 by means of the hinge shaft 31. The upper portion 15b carries the handle 16 attached thereto. The lower portion 15a and the upper portion 15b are connected to one another by a handle adjusting mechanism comprising slidably adjustment guides 19. Adjustment locking members 20 are provided to lock the upper portion 15b to the lower portion 15a at a selected position.

As better shown in Fig. 11, the adjustment guides 19 are tubular members fixedly attached to the upper portion 15b and slidingly inserted in guiding cavities 32 existing in the lower portion 15a. A plurality of lock holes 33 are formed at different heights in the lower portion 15a along each guiding cavity 32. Each adjustment guide 19 has one of the adjustment locking members 20 materialized by a retractable pin inserted in a corresponding hole and urged outwards by an elastic element 34.

By manually pressing inwards the adjustment locking member 20, sliding the adjustment guide 19 along the guiding cavity 32 to make the adjustment locking member to align with one of the lock holes 33, and then releasing the adjustment locking member 20 to allow it to insert in the selected lock hole 33, the position of the handle 16 on the foldable structure 1 is adjusted at different heights with respect to the ground.

In an alternative embodiment (not shown), other adjusting mechanisms are provided, such as articulated quadrilateral mechanisms or scissor mechanisms to adjust the relative position of the upper portion 15b and the lower portion 15a, and/or other locking members are used, as for example tightening knobs, clamps or latches.

The ball basket 3 (individually shown in Figs. 3, 4 and 5) has a fixed frame 4 and a movable bottom 5. The fixed frame 4 is comprised of an upper perimetral section 9 defining an open top, a fixed bottom 8 and side walls 6 extending from the upper perimetral section 9 to the fixed bottom 8, so that the fixed bottom 8 is fixedly attached to and makes part of the fixed frame 4. The movable bottom 5 is located over the fixed bottom 8 and is vertically movable with respect to the fixed frame 4.

Elastic elements 7 are provided between the movable bottom 5 and the fixed frame 4. In the shown example, the elastic elements 7 are helical compression springs which have one end connected to the fixed bottom 8 attached to the fixed frame 4 and another end connected to the movable bottom 5.

The ball basket 3 is configured to contain tennis balls B supported on the movable bottom, and the elastic elements 7 are deformable as a result of the weight of the tennis balls B supported on the movable bottom 5. The elastic elements have an elastic modulus selected to allow the movable bottom 5 to gradually ascend or descend according to the amount of tennis balls B contained in the ball basket 3 so as to keep an upper level of the tennis balls B, with regard to the fixed bottom 8, constant.

Fig. 4 shows the ball basket 3 completely loaded with tennis balls B, so that the weight of the tennis balls B makes the elastic elements 7 to contract and the movable bottom 5 descend to an extent that an upper level of tennis balls B is approximately at the same level than the open top of the ball basket 3.

Fig. 5 shows the ball basket partially loaded with tennis balls B, so that a lesser weight of the tennis balls B makes the elastic elements 7 to extend and the movable bottom 5 ascend to an extent that the upper level of tennis balls B is kept approximately at the same level than the open top of the ball basket 3.

This avoids the need for the tennis trainer or tennis practitioner to excessively bend down to catch the tennis balls B in the ball basket 3 and prevents fatigue and back problems.

In an alternative embodiment (not shown), the elastic elements 7 comprise helical traction springs or elastic straps having an end connected to the upper perimetral section 9 and another end connected to the movable bottom 5.

In the shown example, the ball basket 3 further comprises a detachable and cleanable upper plate 12 supported on the movable bottom 5, so that the tennis balls B in the ball basket 3 rest on the upper plate 12. When the ball basket 3 is empty, fuzz released by the tennis balls B and adhered to the upper plate 12 can be easily removed and cleaned by extracting the upper plate 12 and using for example a vacuum cleaner or a brush to clean it, or simply by shaking it.

As can be seen in Fig. 3, the ball basket 3 includes a removable cover 10 connectable to the upper perimetral section 9 by a perimetral zip 11. Alternatively, the removable cover can be connected by other fastening elements such as clasps, hooks, buttons or buckles. The removable cover 10 is flexible and foldable. When the open top of the ball basket 3 is closed with the removable cover 10, the tennis balls B remain confined within the ball basket 3.

The ball cart 60 includes basket detachable couplings 21 by means of which the fixed frame 4 of the ball basket 3 can be detachably connected to the upper portion 15b of the handle support assembly 15 of the foldable structure 1, whereby the ball basket 3 is movable together with the upper portion 15b of the handle support assembly 15 to adjust the position of the ball basket 3 on the foldable structure 1 at different heights with respect to the ground. Thus, the handle adjusting mechanism is also a basket adjusting mechanism.

As better shown in Figs. 12, 13 and 14, each basket detachable coupling 21 comprises a coupling stud 35 attached to the side wall 6 of the ball basket 3 and coupling housing 36 attached to the upper portion 15b of the handle support assembly 15 of the foldable structure 1. The coupling stud 35 protrudes from the side wall 6 of the ball basket 3 and has a widened section 37 at free end thereof. The coupling housing 36 defines a notch 38 having an opening at an upper part thereof configured to receive the coupling stud 35 and an inner widening 39 configured to receive the widened section 37.

The coupling housing 36 has a circular outer guiding surface 40 and a basket locking member 41 is arranged to rotate about the circular outer guiding surface 40 of the coupling housing 36 between a release position (shown in Fig. 12), in which a gap in the basket locking member 41 is arranged in alignment with the notch 38 and the inner widening 39 of the coupling housing 36 allowing the coupling stud 35 to be coupled to and decoupled from the coupling housing 36, and a locking position (shown in Fig. 13), in which a section of the basket locking member 41 is arranged over the opening of the notch 38 retaining the coupling stud 35 trapped in the coupling housing 36.

The basket locking member 41 is retained to the coupling housing 36 by a sliding tongue-in-groove joint 53 and has a lever 42 that can be manually actuated to rotate the coupling housing 36 between the release position and the locking position. Stops 43 are attached to the upper portion 15b of the handle support assembly 15 nearby the coupling housing 36 to limit rotation of the coupling housing 36 between the release position and the locking position.

Alternatively, other coupling devices and locking members, such as hooks, straps, and brackets, can be implemented to detachably connect the ball basket 3 to the foldable structure 1.

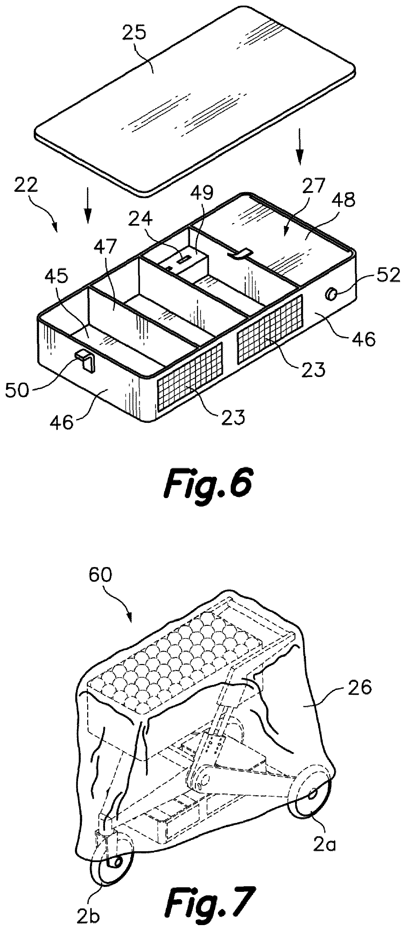

As better shown in Fig. 6, the aforementioned lower tray 22 is located below the ball basket 3 and is detachably connectable to the foldable structure 1. The lower tray 22 comprises a tray bottom 45, side walls 46, and partition webs 47 defining different compartments configured to store personal items, such as for example keys, sunglasses, cell phone, notebooks, pens, kerchiefs, etc. One of the compartments is a thermally isolated compartment 27 closed with a lid 48 and dimensioned to contain one or more beverage containers. The lower tray 22 is optionally provided with an overall cover 25.

One or more photovoltaic solar panels 23 are attached on an outer surface of the side walls 46 of the lower tray 22, and the photovoltaic solar panels 23 are connected to electrically feed a phone charging circuit in connection with one or more USB ports 24 provided in a wall of a closed housing 49 enclosing the phone charging circuit located in one of the compartments of the lower tray 22. These USB ports 24 allow the tennis trainer or tennis practitioner to recharge their cell phones during a tennis training session.

In the shown example, a protruding member 50 is attached to an outer surface of one of the side wall 46 located at a front end of the lower tray 22, and the protruding member 50 is configured to engage a support element 51 provided in a lower part of the front wheel support assembly 14 of the foldable structure (see Fig. 8).

Furthermore, lower tray detachable couplings 52 are provided to connect a rear end of the lower tray 22 to the rear wheel support assembly 13 of the foldable structure (see Fig. 8). The lower tray detachable couplings 52 can include, for example coupling studs attached to the lower tray 22, coupling housings attached to the rear wheel support assembly 13 and lower tray locking members associated to the coupling housings, with the coupling studs, the coupling housings, and the lower tray locking members being similar to the coupling studs 35, coupling housings 36 and basket locking members 41, respectively, of the basket detachable couplings 21 described above with reference to Figs. 12, 13 and 14.

However, other coupling devices and locking members, such as hooks, straps, and brackets, can be alternatively used to perform the function of the protruding member 50, support element 51, and lower tray detachable couplings 52.

As shown in Fig. 7, the ball cart 60 further comprises a removable and foldable waterproof cover 26 configured to cover an upper part of the foldable structure 1, the ball basket 3 and the lower tray 22 while keeping the rear and front wheels 2a, 2b operative. The waterproof cover 26 is configured to be stored in the lower tray 22 in a folded condition.

As an optional feature, according to an alternative embodiment (not shown), the ball cart 60 includes a movable ball indicative element, such as a rotatable wheel, having three different colours representative of three different kinds of ball tennis for different uses. The ball indicative element is configured to be moved within a housing by the tennis coach or the tennis practitioner between three positions in each of which one of the three different colours is visible through a window of the housing to indicate the kind of balls loaded to the ball basket 3. The three colours are preferably green, orange and red. The ball indicative element can be located, for example, at one side of the handle 16, at one side of the upper portion 15b of the handle support assembly 15, or at one side of the fixed frame 4 of the ball basket 3.

Moreover, the handle 16 may include a surface or a display to put the name of the tennis coach or tennis practitioner making use of the ball cart.

## Claims

1. A ball cart for tennis balls, comprising:
a foldable structure (1) provided with wheels arranged to roll on a ground;
a ball basket (3) horizontally supported on said foldable structure (1), said ball basket (3) being configured to contain tennis balls (B); and
a basket adjusting mechanism configured to adjust a position of the ball basket (3) on the foldable structure (1) at different heights with respect to the ground;
**characterized in that** the ball basket (3) comprises:
a fixed frame (4) detachably connectable to the foldable structure (1);
a movable bottom (5) vertically movable with respect to said fixed frame (4);
side walls (6) attached to the fixed frame (4); and
elastic elements (7) having one end connected to the fixed frame (4) and another end connected to the movable bottom (5),
wherein said elastic elements (7) are deformable as a result of a weight of the tennis balls (B) supported on the movable bottom (5) and have an elastic modulus selected to allow the movable bottom (5) to gradually ascend or descend according to the amount of tennis balls (B) contained in the ball basket (3) so as to keep an upper level of the tennis balls (B), with regard to the fixed frame, constant.

2. The ball cart according to claim 1, wherein the ball basket (3) further comprises a fixed bottom (8) fixedly attached to the fixed frame (4) and located below the movable bottom (5), and said elastic elements (7) comprise helical compression springs arranged between said fixed bottom (8) and the movable bottom (5).

3. The ball cart according to claim 2, wherein the fixed frame (4) comprises an upper perimetral section (9) and said side walls (6) extend from said upper perimetral section (9) to the fixed bottom (8).

4. The ball cart according to claim 3, wherein the ball basket (3) includes a removable cover (10) connectable to the upper perimetral section (9) by fastening elements.

5. The ball cart according to claim 3, wherein the ball basket (3) comprises a detachable and cleanable upper plate (12) supported and superimposed on the movable bottom (5).

6. The ball cart according to any one of the previous claims, wherein the foldable structure (1) comprises a rear wheel support assembly (13) carrying two coaxial and spaced apart rear wheels (2a), a front wheel support assembly (14) carrying at least one caster wheel (2b), and a handle support assembly (15) including a handle (16), wherein said rear wheel support assembly (13), said front wheel support assembly (14) and said handle support assembly (15) are hinged to one another about at least one hinge axis (17) and are rotatable between an operative position and a folded position, and wherein at least one structure locking member (18) is provided to lock the rear wheel support assembly (13), the front wheel support assembly (14) and the handle support assembly (15) in said operative position.

7. The ball cart according to claim 6, wherein the handle support assembly (15) has a lower portion (15a) hinged to the rear wheel support assembly (13) and to the front wheel support assembly (14) and an upper portion (15b) attached to said handle (16), said lower portion (15a) and said upper portion (15b) being connected to one another by a handle adjusting mechanism allowing to adjust a position of the handle (16) on the foldable structure (1) at different heights with respect to the ground.

8. The ball cart according to claim 7, wherein said handle adjusting mechanism at least one adjustment guide (19) slidably connecting the upper portion (15b) to the lower portion (15a) and at least one adjustment locking member (20) to lock the upper portion (15b) to the lower portion (15a) at a selected position.

9. The ball cart according to claim 8, wherein the fixed frame (4) of the ball basket (3) is detachably connectable to the upper portion (15b) of the handle support assembly (15) by means of a detachable coupling (21), whereby the ball basket (3) is movable together with the upper portion (15b) of the handle support assembly (15) carrying the handle (16), and the basket adjusting mechanism and the handle adjusting mechanism are common.

10. The ball cart according to any one of the previous claims, wherein a lower tray (22) located below the ball basket (3) is detachably connectable to the foldable structure (1), said lower tray (22) being configured to store personal items.

11. The ball cart according to claim 10, wherein the lower tray (22) has at least one USB port (24) in connection with a phone charging circuit configured to charge a cell phone and at least one photovoltaic solar panel (23) connected to electrically feed said phone charging circuit.

12. The ball cart according to claim 10 or 11, wherein the lower tray (22) is provided with a thermally isolated compartment (27) dimensioned to contain at least one beverage container.

13. The ball cart according to claim 10, 11 or 12, wherein the lower tray (22) is provided with a cover (25).

14. The ball cart according to any one of claims 1 to 9, further comprising a removable and foldable waterproof cover (26) configured to cover the ball basket (3) and at least an upper part of the foldable structure (1).

15. The ball cart according to any one of claims 9 to 13, further comprising a removable and foldable waterproof cover (26) configured to cover the ball basket (3), the lower tray (22) and at least an upper part of the foldable structure (1), said waterproof cover (26) being configured to be stored in the lower tray (22) in a folded condition.
